# EUROPEAN PATENT SPECIFICATION

(11) **EP 1 598 228 B1**
(45) Date of publication and mention of the grant of the patent: **18.08.2010**
(21) Application number: 04102230.2
(22) Date of filing: 19.05.2004
(51) Int. Cl.: B60J 7/047

(54) **Multi-panel roof assembly for a vehicle; and vehicle having such a roof assembly**
Mehrteilige Plattenabdeckung einer Dachöffnungsanordnung für ein Fahrzeug; und Fahrzeug mit der Plattenabdeckung vorgesehen
Ensemble de toit avec multipanneaux pour véhicule: et véhicule avec l'ensemble.

(43) Date of publication of application: 23.11.2005
(60) Divisional application: 08163269.7
(73) Proprietor: Inalfa Roof Systems Group B.V., 5800 AM Venray (NL)
(72) Inventor: Nellen, Marcel, Johan, Christiaan, 5803 HL, Venray (NL)
(74) Representative: Metman, Karel Johannes

(56) References cited:
- WO-A-03/076220
- DE-A- 10 029 718
- DE-A- 19 527 958
- DE-C- 4 127 624
- DE-C- 4 404 618

## Description

The present invention relates to a roof assembly according to the preamble of the claim 1.

Such roof assembly is for example known from WO-A-03/076220. The embodiment shown in Figs. 6-18 thereof comprises a plurality of panels, which are guided with their slide shoes in guide tracks. Each guide track includes two common storage tracks, one for the rear slide shoes and one for the front slide shoes of the panels. Before the panels are stacked, they are uncoupled so that they are able to slide with respect to each other and be stacked one above the other. When the front panel is moved back again to the closed position, the panels should be coupled again and for this purpose, the stack of panels is urged from below by a spring mechanism. Due to this spring force, the panels are urged to be coupled.

It is an object of the present invention to further improve the prior art roof assembly.

For this purpose, the invention provides a roof assembly in accordance with claim 1.

Due to the invention, there is no need anymore for spring means to urge the slides of the closure elements to couple again to each other when they are returned from their stacked position to the closed position. This is a consequence of the fact that the closure elements are coupled by a permanent coupling, which selectively allows relative sliding movements of the slides.

The couplings comprising a curve and a counter member are simple and reliable.

In a preferred embodiment, one, preferably a front closure element, is operatively connected to a driving means, the slides of the closure elements being connected to each other through said couplings, which are constructed such and co-operate with the guide track such that they allow a sliding movement of the respective closure elements in order to be stacked in the open position, and they couple the closure elements again when they are returned to the closed position.

Due to the structure of the couplings and their cooperation with the guide track it is possible to create a simple forcing guide wherein all movements are forced through the cooperation between the slides and the guide track.

For example, the curves of the closure element slides comprise a first uncoupling portion extending in longitudinal direction and a second coupling portion being inclined thereto, the counter members being positioned in the first uncoupling portion of their respective curve when the closure elements are stacked, and the counter members being positioned in the second coupling portion of their respective curve when the closure elements are in their coupled position, and in this coupled position the slides are secured against a movement which would allow the counter member to move through the second portion of the curve.

The invention will further will be elucidated with reference to the drawings showing an embodiment of the roof assembly according to the invention.

Fig. 1 is a perspective view of one half of a vehicle roof, comprising an embodiment of the roof assembly according to the invention, when viewed from above.

Fig. 2 is an enlarged scale perspective view of a guide track on one side of the roof assembly according to Fig. 1.

Figs. 3 - 5 are perspective views of a lost motion device between the front closure element and the drive cable, in three different positions.

Figs. 6 - 8 are perspective views of the lost motion device of Figs. 3 - 5, but viewed from another angle.

Fig. 9 - 12 are perspective views of a height adjusting mechanism to move the rear side of the rear closure element to and from the closed position, in four different positions.

Fig. 13 is an enlarged scale perspective view of the rear part of the guide track which is on the opposite side of the roof opening as the guide track shown in Fig. 2.

Figs. 14, 16 and 19 are views corresponding to that of Fig. 13 but showing the closure element slides in different positions.

Figs. 15, 17, 18 and 20 are perspective views of the rear part of the guide track of Fig. 13, but seen from a different angle and in different positions of the closure element slides.

Fig. 21 is a perspective view of the rear part of the guide track as shown in Fig. 20, but seen from the other side and from below.

Fig. 22 is a view corresponding to that of Fig. 21 but showing the closure element slides without the storage tracks.

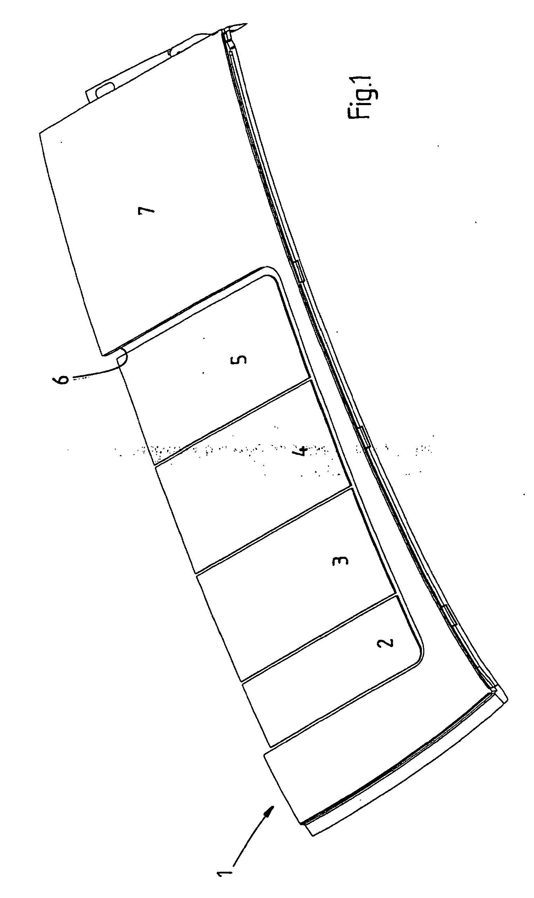

The drawings, and in particular Fig. 1 thereof shows an embodiment of a roof 1 of a vehicle, for example consisting of a passenger car, in particular an MPV car or the like. The roof 1 of the vehicle includes a roof assembly. The roof assembly for the vehicle comprises in this case four movable closure elements 2, 3, 4 and 5, here consisting of rigid, preferably at least partly transparent panels. These panels 2 - 5 are adapted to selectively open and close an opening 6 in the roof 1. In this embodiment, the panels 3, 4 and 5 are of the same size, whereas the front panel 2 is smaller in size, in particular shorter in longitudinal direction of the roof assembly. In the embodiment shown, a panel 7 is a part of the fixed vehicle roof 1 (it could also be fixed to the remainder of the roof) and thus cannot be moved.

The closure elements 2 - 5 are slidably guided in longitudinal guide tracks 8 extending along the opening 6 in the roof 1 and along longitudinal roof beams of the vehicle (not shown). Driving means including an electric motor or the like will cause the opening and closing movements of the closure elements through a drive cable 9 or other connecting element in a manner known from the prior art.

The movable panels can be moved from a closed position lying one behind the other to close the roof opening 6 (as shown in Fig. 1), to a stacked position, lying one above the other below the fixed panel 7. This is the fully opened position in the embodiment shown.

In an alternative embodiment, the fixed panel 7 could be attached to a cross beam and could form the upper part of a cassette (not shown) in which the panels 2 - 5 are accommodated in their open position. The structure could be made such that the cassette together with the panels 2 - 5 may be moved into a trunk of the vehicle, for example in the manner as shown in Figs. 1 - 5 of WO 03/076220, the contents of which are incorporated herein by reference thereto. In this alternative embodiment, an even greater roof opening, simulating a convertible, can be created.

In order to guide the movements of the panels 2 - 5, the roof assembly is equipped with the longitudinal guide tracks 8, one on each longitudinal side of the roof opening 6 and in extension thereof below the fixed panel 7. In the above mentioned alternative embodiment, each longitudinal guide track 8 could be separated in two parts, one in a cassette below the fixed panel 7 and one at the fixed roof. This could be done to allow the cassette to move away into the trunk together with the panels 2 - 5 if they are in the rear part of the guide track 8.

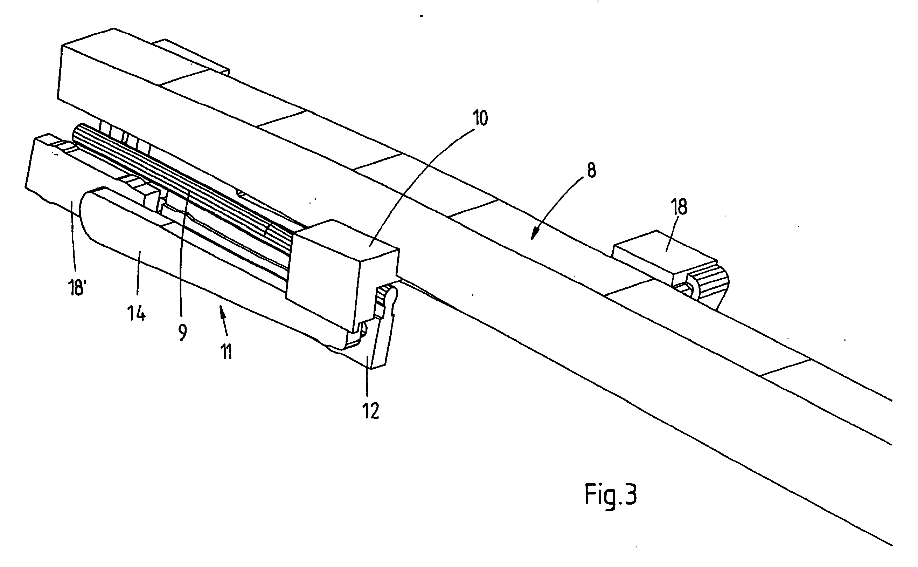

In the embodiment shown, only the front panel 2 is driven directly by a driving means, such as an electric motor (not shown), in order to be slid. As mentioned before, there is a drive cable 9 between the electric motor and the front panel 2. This cable extends in a cable guide 10 (Fig. 3 - 10). In the embodiment shown, in which the rear panel 5 is moved in vertical direction before and after the sliding movements of the panels, the cable 9 is connected to the front panel by means of a lost motion device 11.

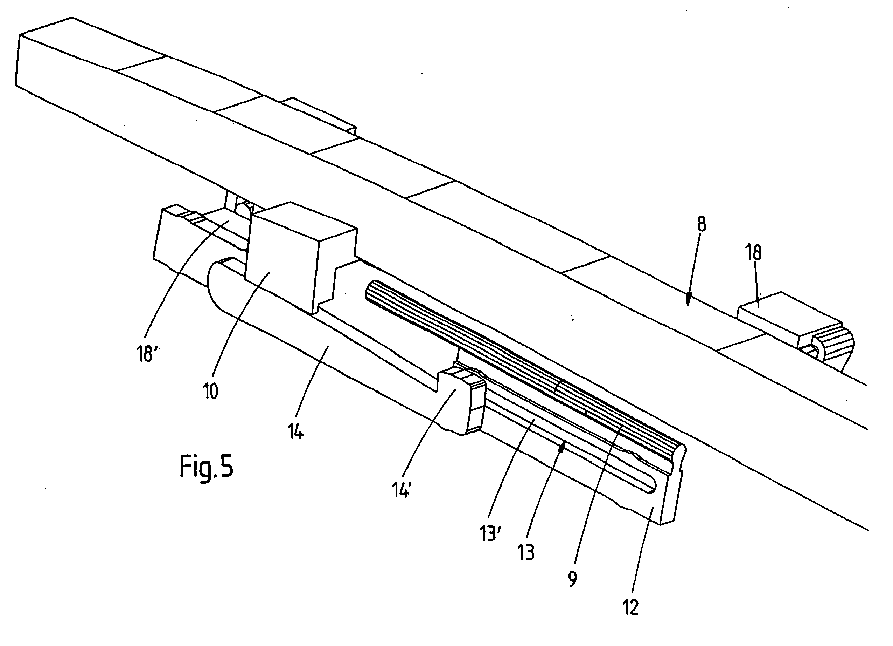

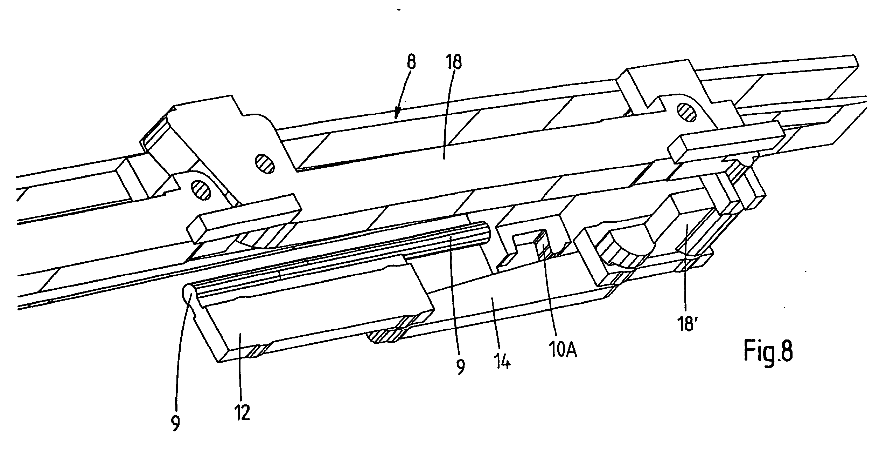

Figs. 3 - 8 shows this lost motion device 11 in more detail. The lost motion device 11 comprises a slot element 12 fixed to the cable 9 and including a slot 13, and a connection element, in this case constructed as an arm 14 pivotally connected to the front closure element 2 (through connecting part 2') and carrying a pin 15 engaging the slot 13 of the slot element 12. The slot 13 includes a straight longitudinal lost motion portion 13' and a downwardly inclined locking portion 13" at the front end of portion 13' . This locking portion 13" is intended to lock the pin 15 of the arm 14 in the slot element 12 in order to obtain a fixed connection between the cable 9 and the front panel 2 during sliding and stacking movements of the panels 2 - 5 (Figs. 5 and 8). This locking mechanism is released as soon as the front position of the panels 2 - 5 is reached.

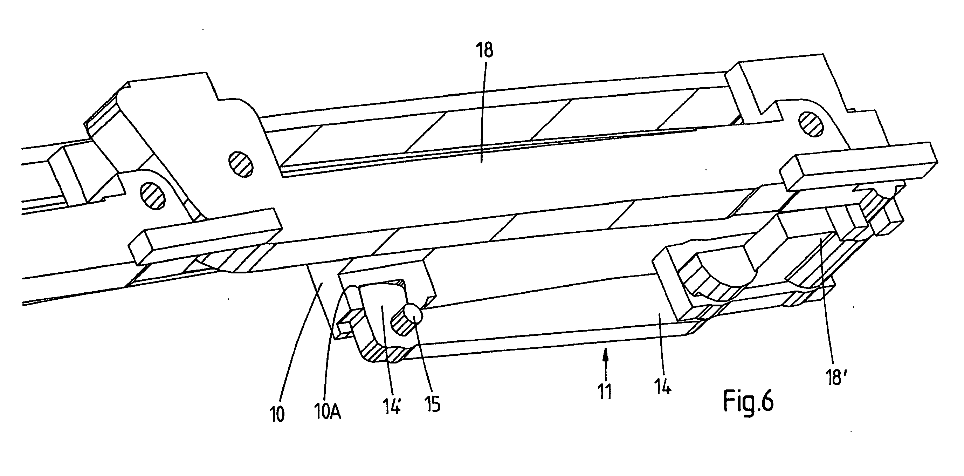

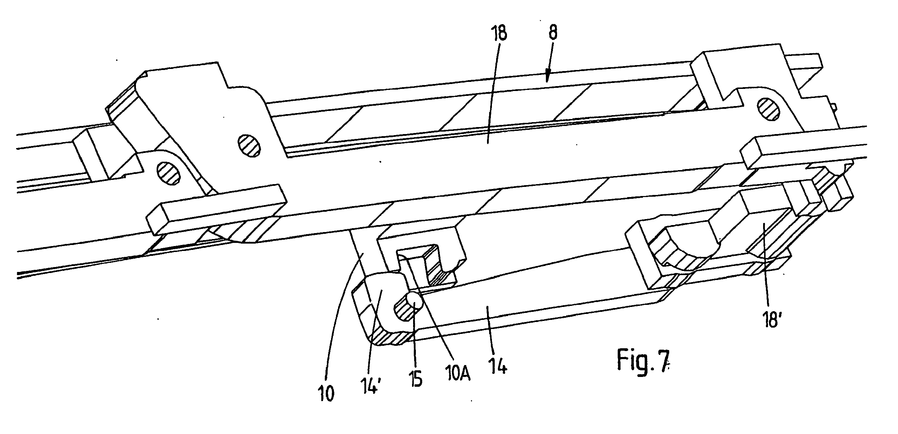

In the front position of the panels 2 - 5, the pin 15 can leave the locking portion 13" because a cam 14' on the free end of the arm 14 is allowed to engage in an upward recess 10A in the cable guide 10 (Figs. 3 and 6, the slot element 12 is left out in Figs. 6 and 7). In rearward positions of the panels 2 - 5, the free end of the arm 14 is prevented from moving upwardly because the cam 14' engages the lower side of the cable guide 10 or another element extending parallel to the longitudinal guide 8 (for the sake of clarity, only a very small part of the cable guide 10 at the position of the recess 10A is shown). When the arm 14 is locked with respect to the cable guide 10, the panels are then also automatically locked in their closed position due to the connection 18' between the arm 14 and the slide 18 of the front panel 2.

In order to cause the rear panel 5 to move in vertical direction, in particular the rear side thereof, in order to enable a sliding movement of the panel 5 without damaging a seal between the rear side of panel 5 and the rear side of the roof opening 6, there is provided a height adjusting mechanism.

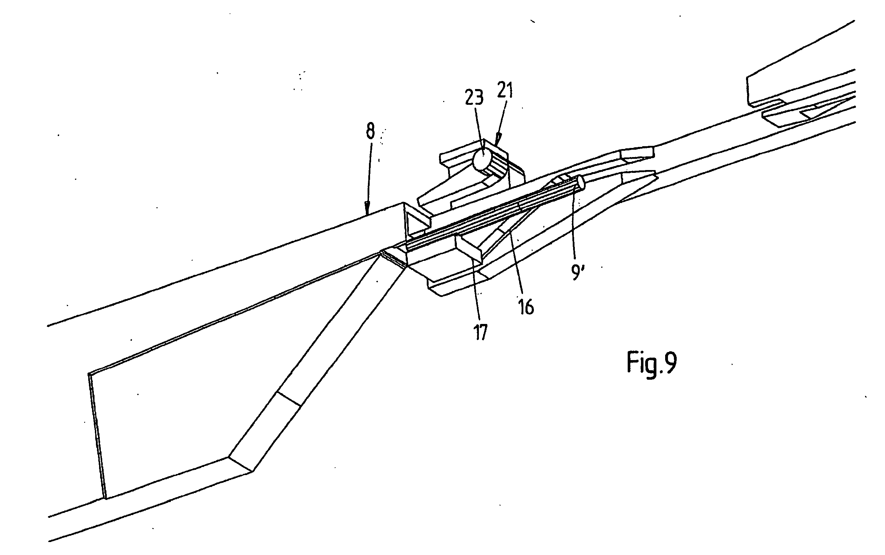

Figs. 9 - 12 illustrate this height adjusting mechanism. The height adjusting mechanism includes a slot 16 at the rear panel 5 and a pin 17 provided on the cable 9' and adapted to engage the slot 16. This cable 9' is the cable which is connected to the panel 2 on the opposite side of the roof opening 6 and thus the pin 17 is fixed to the end of the cable 9' remote from the place where it is connected to the slot element (not shown) on the other side of the roof opening. Consequently, the pin 17 moves rearwardly when the panels 2 - 5 are moved to their front closed position and enters the slot 16 when the panels have reached their front position. The cable 9' moves in cable guide 10' .

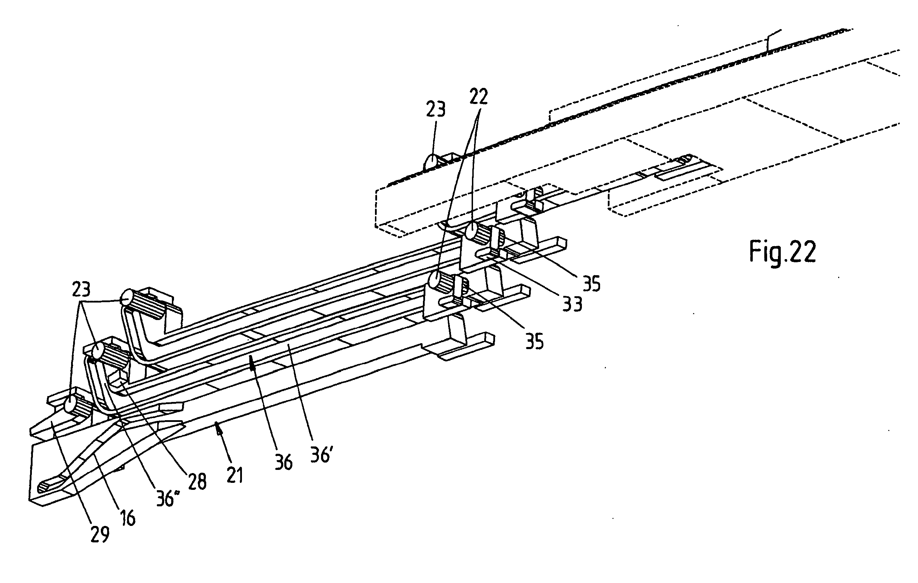

To guide the sliding movement of the panels 2 - 5, they are provided with slides 18 - 21, each provided with a front slide shoe 22 and a rear slide shoe 23 (see Fig. 22). The slide shoes 22 and 23 are in the form of horizontal pins but could be constructed in another way of course. The slide shoes 22 at the rear end of the slides 18 - 21 are of different length, the purpose of which will be explained later on. The upper wall of guide portion 8C of the guide track 8 is provided with a recess 37 to allow the rear slide shoe 23 of the rear panel 5 to enter and leave the guide track 8 when the rear side of panel 5 is moved in vertical position,

The guide track 8 has a higher front portion 8A, an inclined ramp portion 8B and a lower rear portion 8C. This extent enables the panels 2 - 4 to move rearwardly below the fixed panel 7 of the roof. Rearwardly of the rear portion 8C the guide track 8 is connected to storage tracks, in this case common front storage track 24 and three rear storage tracks 25 - 27. The common front storage track 24 is adapted to accommodate the front slide shoes 22, whereas the rear storage tracks 25-27 are adapted to receive each of the rear slide shoes 23 of the slides 19-21 of the panels 3 - 5.

The rear storage tracks 25 - 27 are provided with a first entry guide member 28 which is in the form of a laterally protruding rib between the storage tracks 26 and 27. This member 28 is adapted to intercept an entry element 29 on the rear slide 21 of the rear panel 5 in order to guide the rear slide shoe 23 of the rear slide 21 into the rear storage track 27. Entry guide member 28 is also adapted to intercept an entry element 30 on the slide 20 of the closure element 4 in order to direct the rear slide shoe 23 thereof into the storage track 26. Fig. 22 clearly shows the different positions of the entry elements 29 and 30 (in the form of cams) on their slides 20, 21 which causes the respective rear slide shoes 23 to be directed into different storage tracks 26, 27.

As mentioned before, the rear slide shoes 23 of the slides 18 - 21 have different lengths corresponding to the depths of the storage tracks 25 - 27 in which they should engage. The short rear slide shoe 23 of the rear slide 21 engages into a shallow storage track 27 and the longer rear slide shoe 23 of the slide 20 is unable to enter into this shallow storage track 27 and is forced to continue to move in the guide track 8. The length of the rear slide shoe 23 of the slide 20 is adapted to the depth of the storage track 26 while the long rear slide shoe 23 of slide 19 is only capable of entering the rear storage track 25.

In order to prevent the rear slide shoes 23 from entering the common front storage track 24, the guide track 8 is provided with an auxiliary guide 31 in this case in the form of a lateral rib extending parallel to the storage track 8. This auxiliary guide 31 is positioned near the entry of the common front storage track 24 and is adapted to be engaged by an auxiliary guide element 32 on the slides 19 - 21 in the vicinity of their rear slide shoe 23. The engagement of the auxiliary guide element 32 with the auxiliary guide 31 prevents the slides 19 - 21 to move downwardly and therefore prevents the respective rear slide shoe 23 from entering the front storage track 24.

In order to force the front slide shoes 22 into the common front storage track 24, the slides are provided with front entry elements 33 near the front slide shoe 22, adapted to come into engagement with a front entry guide member 34, here in a form of a wall element extending parallel to the common front storage track 24.

In order to enable the panels 2 - 5 to slide as a unit on the one hand and to be stacked one above the other on the other hand, each two slides 18 - 21 of the panels 2 - 5 are provided with a permanent coupling. In the embodiment shown, the coupling between each two slides 18 - 21 comprises a coupling pin 35 at the rear end of the slides 19 - 21 (in this case in line with the respective front slide shoe 22) and a coupling slot 36 provided in the slides 18 - 21 in front thereof. Each coupling slot 36 comprises a first uncoupling portion 36' extending in longitudinal direction of the slide and a second coupling portion 36' ' which is inclined thereto. The coupling pins 35 are positioned in the first uncoupling portion 36' when the panels 2 - 5 are stacked, while the coupling pins 35 are positioned in the second coupling portion 36' ' when the panels 2-5 are in their coupled position in order to secure the slides 18 - 21 against a relative movement. In this coupled position, the slides are prevented from moving in a vertical direction with respect to each other, thereby confining the coupling pins 35 in their inclined coupling portion 36' ' of the slot 36. The entry of the respective front slide shoe 22 into the front storage track 24 causes the relative vertical movement of the rear slides 19 - 21 with respect to the next front slides 18 - 20 so as to enable the pins 35 to move from their coupling portion 36' ' to their uncoupling portion 36' of the slot 36. Thus, if the rear slide 21 is in its stored position below the fixed roof panel 7 the coupling pin 35 of the next slide 20 is able to move through the uncoupling portion 36' of the slot 36.

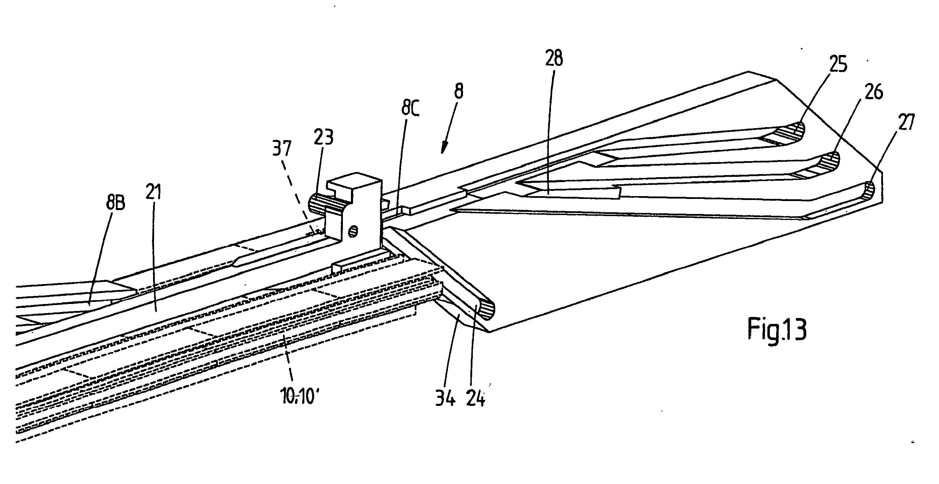

Figs. 13 - 20 illustrate the operation of the stacking mechanism.

In Fig. 13, the roof assembly is in its closed position, with the height adjusting mechanism at the rear slide 21 in its high position, i.e. with the rear edge of the panel 5 within the roof opening 6. The pin 17 of the cable 9' is at the rear end of the slot 16 in the slide 21 of the rear panel 5 (Fig. 9).

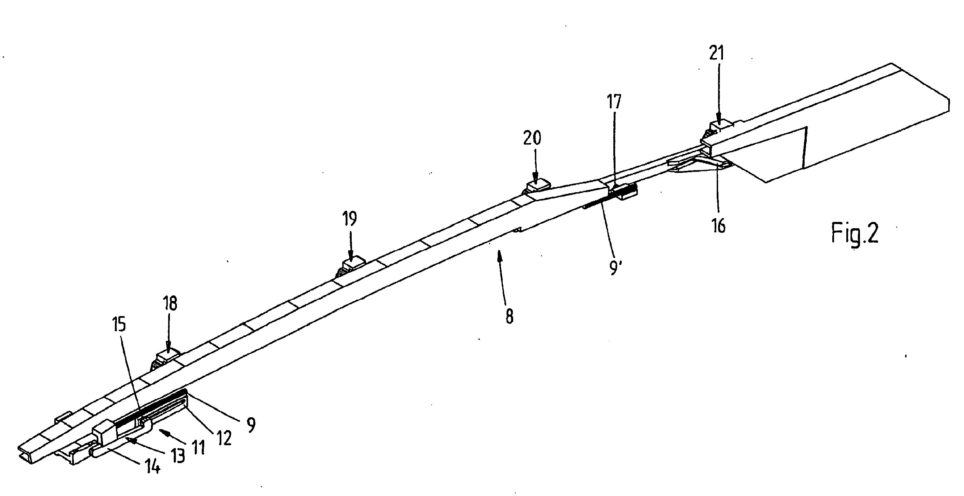

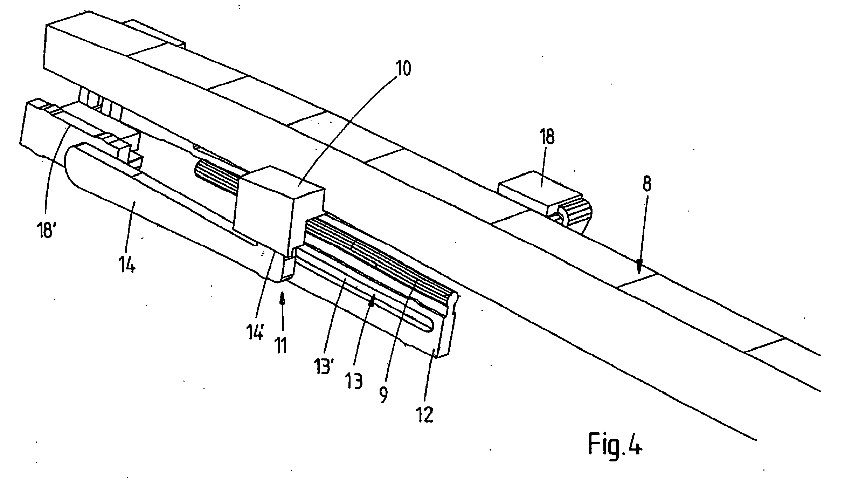

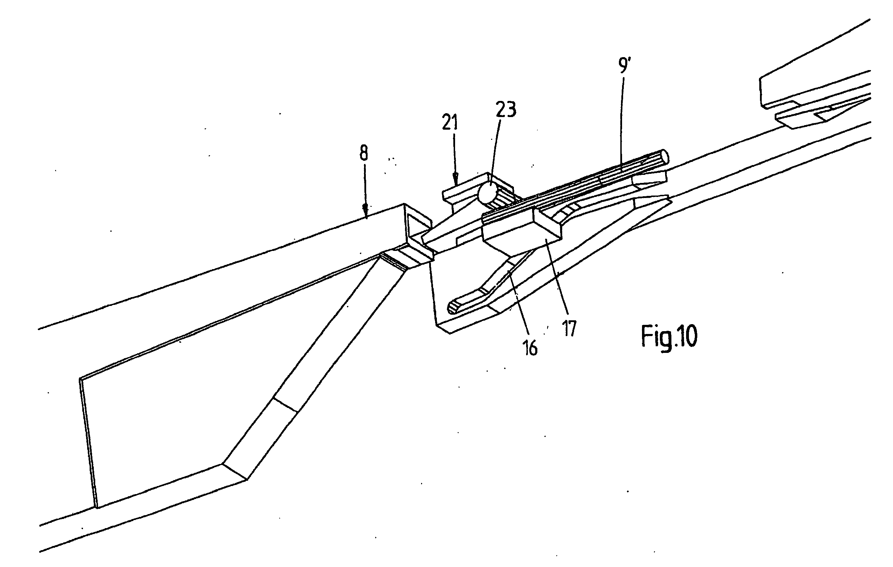

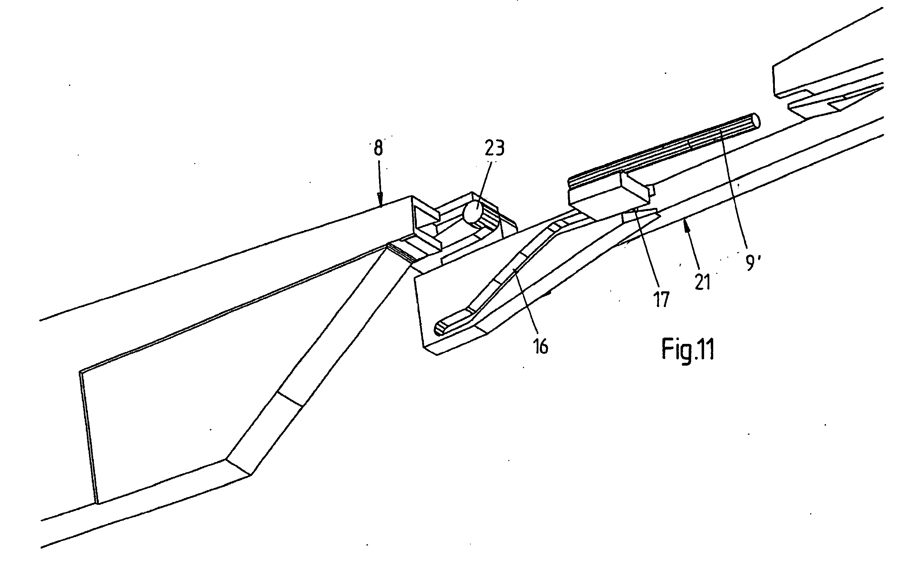

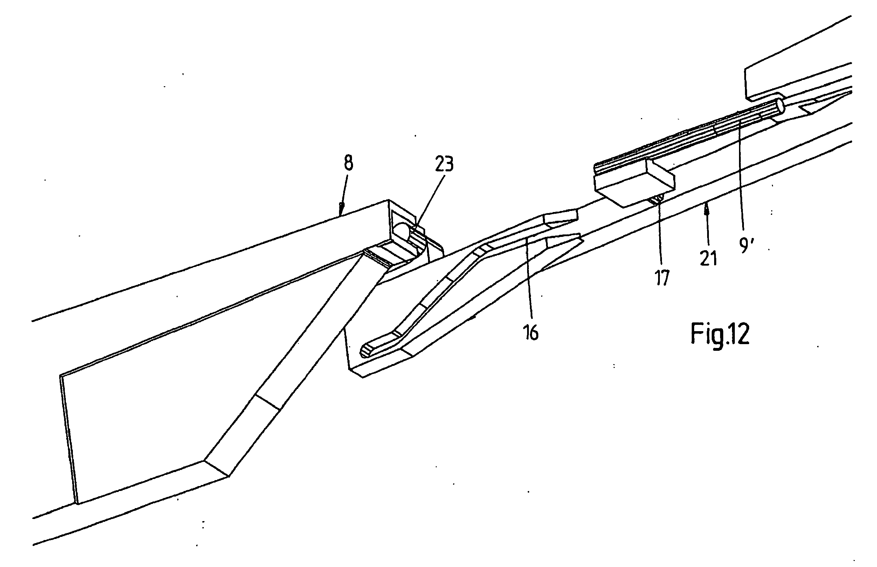

When the cable 9 is displaced rearwardly the lost motion device 11 allows a relative movement between the cable 9 and the front panel 2 (Figs. 3, 4) and the pin 17 of the drive cable 9' runs forwardly through the slot 16 in the slide 21 of the rear panel 5 and causes the rear side of the rear panel 5 to move downwardly to a level below the fixed roof panel 7 (Figs. 10, 11). If this pin 17 has left the slot 16 (Fig. 12), the lost motion device 11 becomes locked (Fig. 5) and the cable 9 is then locked with respect to the front panel 2 (see also Fig. 2).

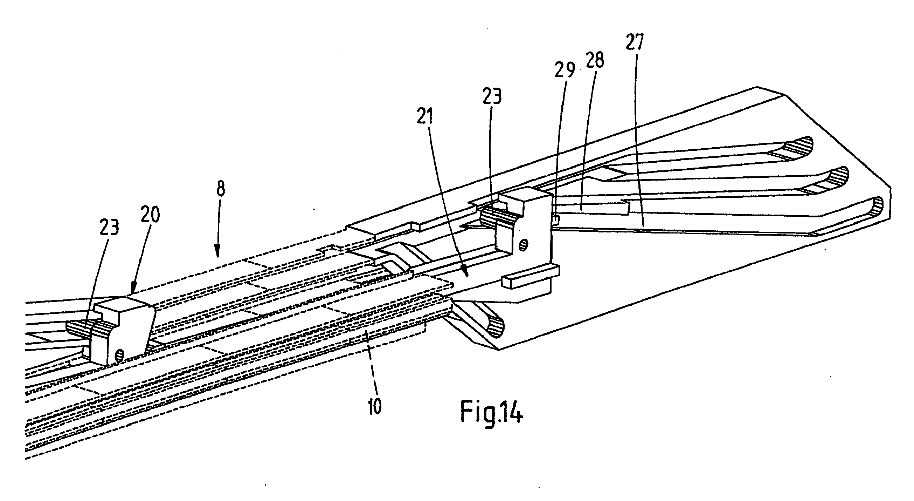

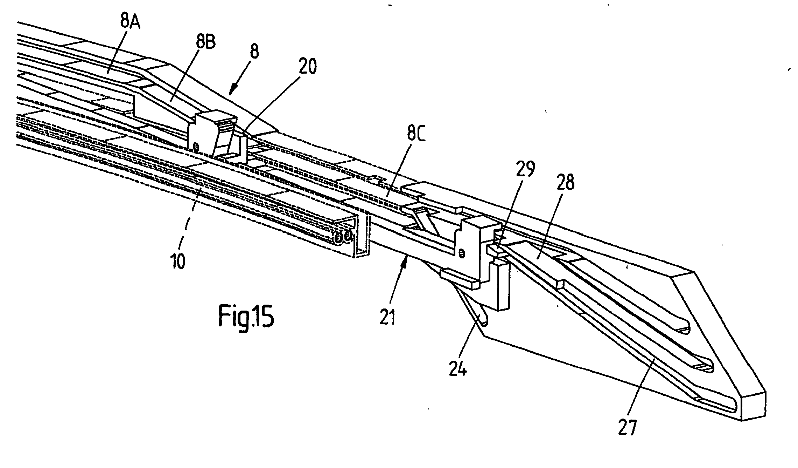

In Fig. 14 and 15, the rear panel 5 has been moved a distance rearwardly to such an extent that the rear slide shoe 23 has arrived at the entrance of the storage track 27. The rear slide shoe 23 has passed the common front storage track 24 due to the engagement between the auxiliary guide member 32 and the auxiliary guide 31. As is shown in Fig. 15, the entry element 29 has come into engagement with the entry guide member 28 of the guide track 8 thereby forcing the slide 21 downwardly and the rear slide shoe 23 into the storage track 27. The slide 20 of the panel 4 has followed the slide 21 due to their engagement through the coupling 35, 36. The rear slide shoe 23 has moved through the ramp portion 8B of the guide track 8. Thus, the rear side of the panel 4 has moved to a level below the fixed roof panel 7.

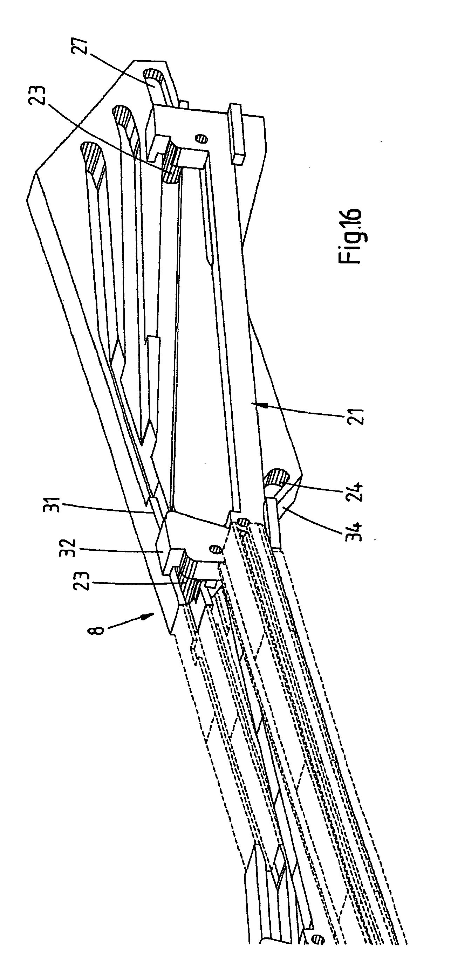

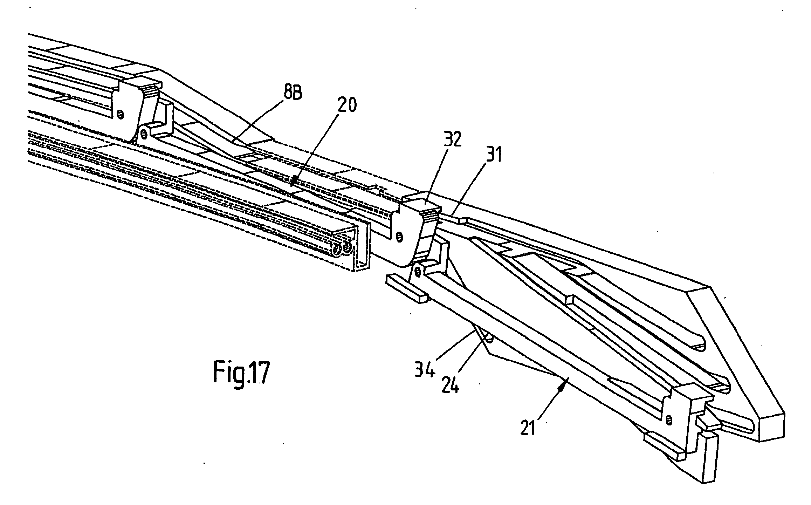

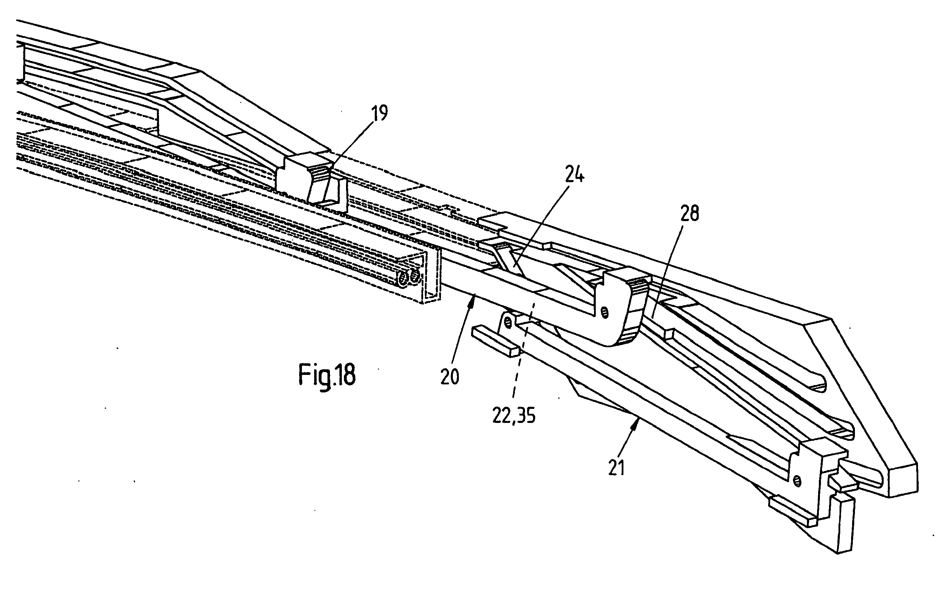

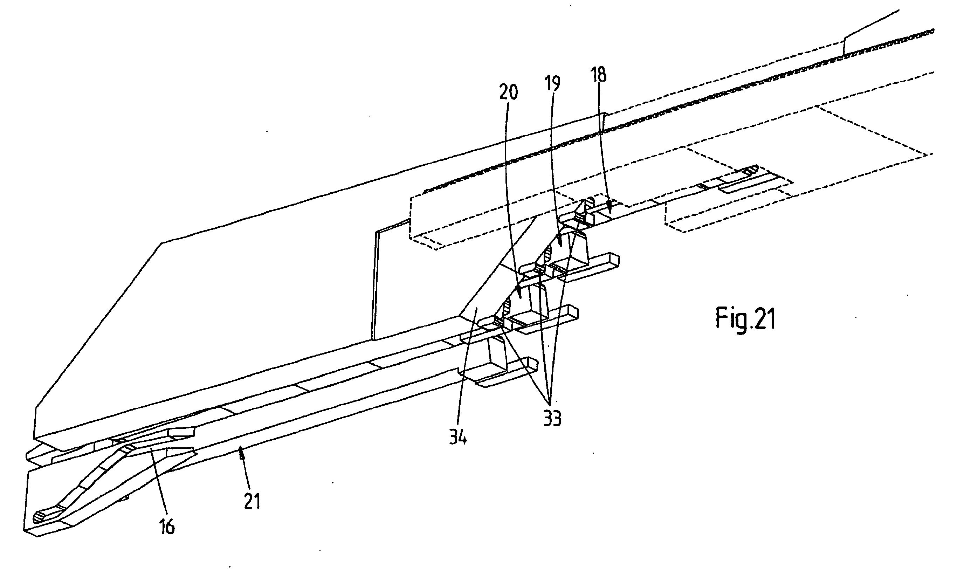

In Fig. 16 and 17, the rear slide shoe 23 has moved through the greater part of the rear storage track 27, to such an extent that the front slide shoe 22 has reached the common front storage track 24 and is forced into the storage track 24 by the engagement of the front entry element 33 with the front entry guide member 34 (see Fig. 21). As a result of the downward movement of the front end of the slide 21, the coupling pin 35 of the rear slide 21 is moved through the coupling portion 36' ' of the coupling slot 36 thereby moving in the direction to the uncoupling portion 36' . In Fig. 18, the coupling pin 35 of the rear slide 21 has arrived in the uncoupling portion 36' of the slot 36 in the slide 20 and as a result, the slide 20 is allowed to move rearwardly relative to the slide 21. The slide 21 is now no longer driven together with the slide 20 and the movement of the rear slide 21 is now only dependent on the position of the crossing point between the front storage track 24 and the slot 36 in the slide 20. The front slide shoe 22 and the pin 35 are positioned in this crossing point.

The entry element 30 of the slide 20 has come into engagement with the entry guide member 28 and as a result of this engagement the rear slide shoe 23 of the slide 20 is forced into the storage track 26.

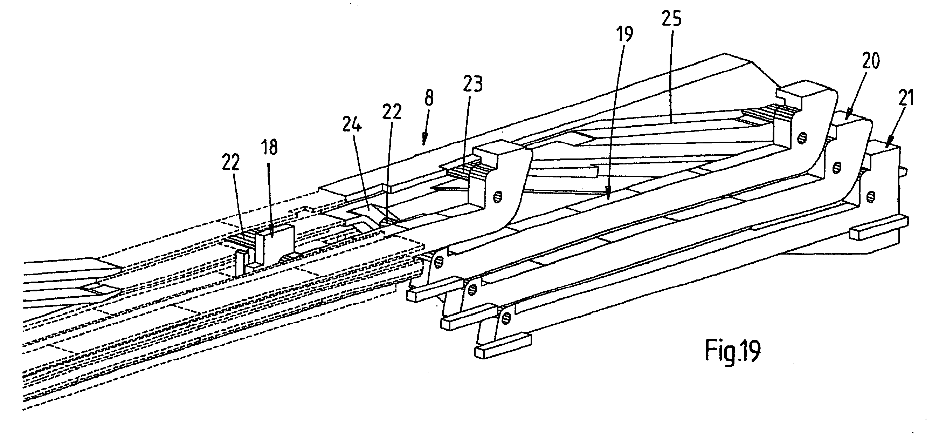

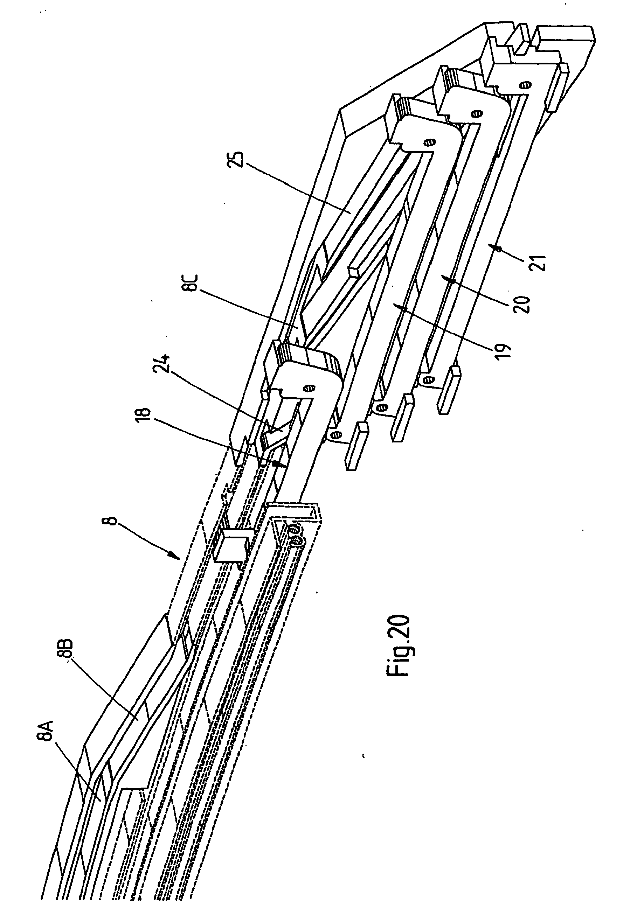

In the position of Fig. 19 and 20, the panels 3, 4 and 5 are in their stacked position, one above of the other. The front panel 2 is almost in its rear position, so that the roof opening section is almost completely cleared. The rear slide shoe 23 of the panel 3 has completely moved through the storage track 25 and the front slide shoes 22 of all slides 19, 20 and 21 are in the common front storage track 24.

The operation of the stacking mechanism is similar when the roof assembly is closed again. However, the slide shoes 22, 23 automatically arrive in the guide track 8 without the help of entry guide members. The roof assembly is completely closed as soon as the rear side of the rear panel 5 is moved upwardly into the roof opening 6 and all panels 2 - 5 are locked in their closed position.

From the foregoing it will be clear that the invention provides a multiple panel roof assembly, which may operate without springs and in which all movements are obtained by forcing guides which leads to a reliable operation.

The invention is not limited to the embodiment shown in a drawing and described herein before, which may be varied in different manners within the scope of the appended claims.

## Claims

1. A roof assembly for selectively opening and closing an opening (6) in a roof (1) of a vehicle, comprising a plurality of closure elements (2 - 5), said closure elements are at least movable between a closed position for closing the roof opening, and an open, rearwardly displaced position substantially below the roof (1, 7), wherein the roof assembly further comprises a common longitudinal guide track (8) extending at least below each side of the roof and along the roof opening (6), said closure elements (2 - 5) being guided by said longitudinal guide tracks (8) by means of slide shoes (22, 23), each guide track including storage tracks (25 - 27) opening into the guide track (8) from below in order to accommodate the slide shoes (22, 23) of the closure elements so as to stack the closure elements one above the other in their open position below the roof (1, 7), wherein each closure element (2 - 5) comprises on at least one of its sides a slide (18 - 21) carrying at least one of said slide shoes (22, 23), **characterized in that** said slides of the closure elements being coupled one to the next through a permanent coupling (35, 36) allowing relative sliding movements when the closure elements (2 - 5) are being stacked or unstacked., said couplings (35, 36) comprising a curve (36) and a counter member (35), such as a slot and a pin, such that in each two adjacent slides (18 - 21) said curve (36) is provided on one of the slides (18 - 20) and the counter member (35) is provided on the adjacent slides (19 - 21).

2. A roof assembly according to claim 1, wherein one, preferably a front closure element (2), is operatively connected to a driving means, and wherein the slides (18 - 21) of the closure elements (2 - 5) are connected to each other through said couplings (35, 36), which are constructed such and co-operate with the guide track (8) such that they allow a sliding movement of the respective closure elements in order to be stacked in the open position, and they couple the closure elements again when they are returned to the closed position.

3. A roof assembly according to claim 2, wherein the curves (36) of the closure element slides comprise a first uncoupling portion (36') extending in longitudinal direction and a second coupling portion (36'') being inclined thereto, the counter members (35) being positioned in the first uncoupling portion (36' ) of their respective curve when the closure elements are stacked, and the counter members (35) being positioned in the second coupling portion (36'') of their respective curve when the closure elements are in their coupled position, and in this coupled position the slides are secured against a movement which would allow the counter member to move through the second portion of the curve.

4. A roof assembly according to one of the preceding claims, wherein the slides (18 - 21) comprise front and rear slide shoes (22, 23), the storage tracks include a common front storage track (24) for the front slide shoes (22) of the slides (19 - 21), the guide track (8) comprising an auxiliary guide (31) at the position of the entry of the common front storage track (24), the slides being provided with an auxiliary guide element (32) which is in engagement with the auxiliary guide (31) when the rear slide shoe (23) is above the common front storage track (24).

5. A roof assembly according to claim 4, wherein the front storage track (24) is provided with a front entry guide member (34), and the slides (19 - 21) are provided with front entry elements (33) adapted to come in engagement with the front entry guide member (34) in order to urge the front slide shoe (22) into the common front storage track (24).

6. A roof assembly according to one of the preceding claims wherein the storage tracks (24 - 27) include rear storage tracks (25 - 27), each for the rear slide shoes (23) of the closure elements (3 - 5).

7. A roof assembly according to claim 6, wherein the rear storage tracks (25 - 27) are provided with at least one entry guide member (28), whereas at least some of the slides (19 - 21) are provided with entry elements (29, 30) adapted to engage with the at least one entry guide member (28) so as to be urged in the respective rear storage track (25 - 27).

8. A roof assembly according to claim 7, wherein the at least one entry guide member (28) co-operates with the entry elements (29, 30) of at least two closure elements (4, 5).

9. A roof assembly according to one of the preceding claims, wherein a rear closure element (5) is connected to the driving means through a height adjusting mechanism, such as a pin-slot (16, 17) connection, which is operative adjacent the closed position of the roof assembly in order to substantially vertically lower and raise the rear side of the rear closure element (5) from and to its closed position in the roof opening (6), a driving means (9) being connected to a front closure element through a lost motion device (11).

## Patentansprüche

1. Eine Dachanordnung, die eine Mehrzahl von Schließelementen (2 bis 5) aufweist, zum selektiven Öffnen und Schließen einer Öffnung (6) in einem Dach (1) eines Fahrzeugs, wobei die Schließelemente mindestens zwischen einer Schließposition zum Schließen der Dachöffnung und einer nach hinten, im Wesentlichen unter das Dach (1, 7) verlagerten Offenposition bewegbar sind, wobei die Dachanordnung ferner eine gemeinsame Längsführungsschiene (8) aufweist, die sich mindestens unter jeder Seite des Dachs und entlang der Dachöffnung (6) erstreckt, wobei die Schließelemente (2 bis 5) mittels Gleitschuhen (22, 23) von den Längsführungsschienen (8) geführt werden, wobei jede Führungsschiene Lagerschienen (25 bis 27) aufweist, die sich von unten in die Führungsschiene (8) öffnen, um die Gleitschuhe (22, 23) der Schließelemente aufzunehmen, um die Schließelemente in ihrer Offenposition unter dem Dach (1, 7) übereinanderzustapeln, wobei jedes Schließelement (2 bis 5) an wenigstens einer seiner Seiten ein mindestens einen der Gleitschuhe (22, 23) tragendes Gleitstück (18 bis 21) aufweist, **dadurch gekennzeichnet, dass** die Gleitstücke der Schließelemente durch eine Dauerkupplung (35, 36) jeweils mit dem darauffolgenden gekuppelt sind, wodurch relative Gleitbewegungen ermöglicht werden, wenn die Schließelemente (2 bis 5) übereinandergestapelt oder entstapelt werden, wobei die Kupplungen (35, 36) eine Krümmung (36) und ein Gegenelement (35), zum Beispiel einen Schlitz und einen Stift aufweisen, so dass bei jedem von zwei benachbarten Gleitstücken (18 bis 21) die Krümmung (36) an einem der Gleitstücke (18 bis 20) und das Gegenelement (35) an den benachbarten Gleitstücken (19 bis 21) vorgesehen sind.

2. Eine Dachanordnung gemäß Anspruch 1, wobei ein Schließelement, vorzugsweise ein vorderes Schließelement (2) wirkungsmäßig an ein Antriebsmittel angeschlossen ist und die Gleitstücke (18 bis 21) der Schließelemente (2 bis 5) durch die Kupplungen (35, 36) miteinander gekuppelt sind, wobei diese derart ausgestaltet sind und derart mit der Führungsschiene (8) zusammenwirken, dass sie eine Gleitbewegung der jeweiligen Schließelemente für ein Stapeln in die Offenposition ermöglichen und die Schließelemente erneut kuppeln, wenn sie in die Schließposition zurückgebracht sind.

3. Eine Dachanordnung gemäß Anspruch 2, wobei die Krümmungen (36) der Schließelementgleitstücke einen sich in Längsrichtung erstreckenden ersten Entkupplungsabschnitt (36') und einen relativ dazu geneigten zweiten Kuppelabschnitt (36") aufweisen, wobei die Gegenelemente (35) in dem ersten Entkupplungsabschnitt (36') ihrer jeweiligen Krümmung positioniert sind, wenn die Schließelemente übereinandergestapelt sind, und die Gegenelemente (35) in dem zweiten Kuppelabschnitt (36") ihrer jeweiligen Krümmung positioniert sind, wenn die Schließelemente in ihrer Kupplungsposition sind, und wobei die Gleitstücke in dieser Kupplungsposition gegen eine Bewegung gesichert sind, die dem Gegenelement ermöglichen würde, sich durch den zweiten Abschnitt der Krümmung hindurchzubewegen.

4. Eine Dachanordnung gemäß einem der vorhergehenden Ansprüche, wobei die Gleitstücke (18 bis 21) einen vorderen und einen hinteren Gleitschuh (22, 23) aufweisen, die Lagerschienen eine gemeinsame vordere Lagerschiene (24) für die vorderen Gleitschuhe (22) der Gleitstücke (19 bis 21) aufweisen, wobei die Führungsschiene (8) eine Hilfsführung (31) an der Position des Eingangs der gemeinsamen vorderen Lagerschiene (24) aufweist, und wobei die Gleitstücke mit einem Hilfsführungselement (32) versehen sind, das mit der Hilfsführung (31) in Eingriff ist, wenn der hintere Gleitschuh (23) über der gemeinsamen vorderen Lagerschiene (24) ist.

5. Eine Dachanordnung gemäß Anspruch 4, wobei die vordere Lagerschiene (24) mit einem vorderen Eingangsführungselement (34) versehen ist und die Gleitstücke (19 bis 21) mit vorderen Eingangselementen (33) versehen sind, die eingerichtet sind, um mit dem vorderen Eingangsführungselement (34) in Eingriff zu gelangen, um den vorderen Gleitschuh (22) in die gemeinsame vordere Lagerschiene (24) zu zwingen.

6. Eine Dachanordnung gemäß einem der vorhergehenden Ansprüche, wobei die Lagerschienen (24 bis 27) jeweils für die hinteren Gleitschuhe (23) der Schließelemente (3 bis 5) hintere Lagerschienen (25 bis 27) aufweisen.

7. Eine Dachanordnung gemäß Anspruch 6, wobei die hinteren Lagerschienen (25 bis 27) mit mindestens einem Eingangsführungselement (28) versehen sind, wobei zumindest einige der Gleitstücke (19 bis 21) mit Eingangselementen (29, 30) versehen sind, die für einen Eingriff mit dem wenigstens einen Eingangsführungselement (28) eingerichtet sind, um in die jeweilige hintere Lagerschiene (25 bis 27) gezwungen zu werden.

8. Eine Dachanordnung gemäß Anspruch 7, wobei das mindestens eine Eingangsführungselement (28) mit den Eingangselementen (29, 30) von mindestens zwei Schließelementen (4, 5) zusammenwirkt.

9. Eine Dachanordnung gemäß einem der vorhergehenden Ansprüche, wobei ein hinteres Schließelement (5) durch einen Höhenverstellmechanismus, zum Beispiel eine Stift-Schlitz-Verbindung (16, 17) an das Antriebsmittel angeschlossen ist, die benachbart zu der Schließposition der Dachanordnung betreibbar ist, um die hintere Seite des hinteren Schließelements (5) im Wesentlichen vertikal von seiner Schließposition in der Dachöffnung (6) abzusenken und zu der Schließposition anzuheben, wobei ein Antriebsmittel (9) durch eine Leerlaufvorrichtung (11) an das vordere Schließelement angeschlossen ist.

## Revendications

1. Ensemble toit pour ouvrir et fermer sélectivement une ouverture (6) dans un toit (1) d'un véhicule, comprenant une pluralité d'éléments de fermeture (2-5), lesdits éléments de fermeture sont au moins mobiles entre une position fermée, pour fermer l'ouverture de toit, et une position ouverte, déplacés vers l'arrière sensiblement en dessous du toit (1, 7), dans lequel l'ensemble toit comprend en outre un rail de guidage longitudinal commun (8) s'étendant au moins en dessous de chaque côté du toit et le long de l'ouverture de toit (6), lesdits éléments de fermeture (2-5) étant guidés par lesdits rails de guidage longitudinaux (8) au moyen de sabots coulissants (22, 23), chaque rail de guidage comprenant des pistes de logement (25-27) donnant dans le rail de guidage (8) à partir du dessous afin de loger les sabots coulissants (22, 23) des éléments de fermeture afin d'empiler les éléments de fermeture les uns au-dessus des autres dans leur position ouverte en dessous du toit (1, 7), dans lequel chaque élément de fermeture (2-5) comprend sur au moins un de ses côtés une glissière (18-21) supportant au moins un desdits sabots coulissants (22, 23), **caractérisé en ce que** lesdites glissières des éléments de fermeture sont accouplées les unes avec les autres de façon adjacente par l'intermédiaire d'un accouplement permanent (35, 36) permettant des mouvements coulissants relatifs lorsque les éléments de fermeture (2 à 5) sont empilés ou désempilés, lesdits accouplements (35, 36) comprenant une courbe (36) et un contre-élément (35), tels qu'une fente et une goupille, de sorte que, dans chaque paire de glissières adjacentes (18-21), ladite courbe (36) soit prévue sur une des glissières (18-20) et le contre-élément (35) soit prévu sur les glissières adjacentes (19-21).

2. Ensemble toit selon la revendication 1, dans lequel, un élément de fermeture, de préférence un élément de fermeture avant (2), est relié en fonctionnement à un moyen d'entraînement, et dans lequel les glissières (18-21) des éléments de fermeture (2-5) sont reliées les unes aux autres par l'intermédiaire desdits accouplements (35, 36), qui sont construits ainsi et coopèrent avec le rail de guidage (8) de sorte qu'ils permettent un mouvement coulissant des éléments de fermeture respectifs afin d'être empilés dans la position ouverte, et ils accouplent les éléments de fermeture à nouveau lorsqu'ils sont remis dans la position fermée.

3. Ensemble toit selon la revendication 2, dans lequel les courbes (36) des glissières d'élément de fermeture comprennent une première partie de désaccouplement (36') s'étendant dans une direction longitudinale et une seconde partie d'accouplement (36") inclinée par rapport à celle-ci, les contre-éléments (35) étant positionnés dans la première partie de désaccouplement (36') de leur courbe respective lorsque les éléments de fermeture sont empilés, et les contre-éléments (35) étant positionnés dans la seconde partie d'accouplement (36") de leur courbe respective lorsque les éléments de fermeture sont dans leur position accouplée, et dans cette position accouplée, les glissières sont fixées pour empêcher un mouvement qui permettrait au contre-élément de se déplacer à travers la seconde partie de la courbe.

4. Ensemble toit selon une des revendications précédentes, dans lequel les glissières (18-21) comprennent des sabots coulissants avant et arrière (22, 23), les pistes de logement comprennent une piste de logement avant commune (24) pour les sabots coulissants avant (22) des glissières (19-21), le rail de guidage (8) comprenant un guidage auxiliaire (31) dans la position de l'entrée de la piste de logement avant commune (24), les glissières étant pourvues d'un élément de guidage auxiliaire (32) qui est en prise avec le guidage auxiliaire (31) lorsque le sabot coulissant arrière (23) est au-dessus de la piste de logement avant commune (24).

5. Ensemble toit selon la revendication 4, dans lequel la piste de logement avant (24) est pourvue d'un élément de guidage d'entrée avant (34), et les glissières (19-21) sont pourvues d'éléments d'entrée avant (33) adaptés pour entrer en prise avec l'élément de guidage d'entrée avant (34) afin de pousser le sabot coulissant avant (22) dans la piste de logement avant commune (24).

6. Ensemble toit selon une des revendications précédentes, dans lequel les pistes de logement (24 à 27) comprennent des pistes de logement arrière (25 à 27), chacune pour les sabots coulissants arrière (23) des éléments de fermeture (3-6).

7. Ensemble toit selon la revendication 6, dans lequel les pistes de logement arrière (25-27) sont pourvues d'au moins un élément de guidage d'entrée (28), alors qu'au moins certaines des glissières (19-21) sont pourvues d'éléments d'entrée (29, 30), adaptés pour entrer en prise avec l'au moins un élément de guidage d'entrée (28), afin d'être poussées dans la piste de logement arrière respective (25-27).

8. Ensemble toit selon la revendication 7, dans lequel l'au moins un élément de guidage d'entrée (28) coopère avec les éléments d'entrée (29, 30) d'au moins deux éléments de fermeture (4, 5).

9. Ensemble toit selon une des revendications précédentes, dans lequel un élément de fermeture arrière (5) est relié au moyen d'entraînement par l'intermédiaire d'un mécanisme de réglage de hauteur, tel qu'une liaison goupille-fente (16, 17), qui fonctionne de façon adjacente à la position fermée de l'ensemble toit afin d'abaisser et d'élever de façon sensiblement verticale le côté arrière de l'élément de fermeture arrière (5) à partir de et jusqu'à sa position fermée dans l'ouverture de toit (6), un moyen d'entraînement (9) étant relié à un élément de fermeture avant par l'intermédiaire d'un dispositif de mouvement perdu (11).
